# EUROPEAN PATENT APPLICATION

(11) **EP 4 597 070 A1**
(43) Date of publication of application: **06.08.2025**
(21) Application number: 24155607.5
(22) Date of filing: 02.02.2024
(51) Int. Cl.: G01N 1/08, G01N 1/28

(54) **DEVICE AND METHOD FOR GENERATING MICROTISSUE FRAGMENTS**

(71) Applicant: mimiX Biotherapeutics SA, 2503 Biel / Bienne (CH)
(72) Inventor: Scheidegger, Andreas, 3032 Hinterkappelen (CH); Sojic, Roman, 1400 Yverdon-les-Bains (CH); Thurner, Marc, 2075 Wavre (CH)
(74) Representative: P&TS SA (AG, Ltd.)

(57) **Abstract**

Cutting member (100) for mincing biological tissue comprising a cutter body (10) having a plurality of ducts (2) with two open ends, each duct (2) opening on one open end into a circumferential cutting blade (3) for incising a biological tissue, said blade (3) having a circular cross-section or a regular polygonal cross-section of at least five angles. A plurality of circumferential cutting blades form at least a portion of a cutting surface (13) of said cutter body. The cutting member (100) may be arranged to cooperate with a stamping member comprising a stamp body with a plurality of stamp rods, each stamp rod being dimensioned to match a duct (2) of the cutting member (100). The application further concerns a device comprising the cutting member (100) and the stamping member, as well as a method for generating minced tissue graft using the cutting member (100) and the stamping member.

## Description

### Technical domain

The present invention concerns equipment and a method for mincing biological tissue samples to generate microtissue fragments.

### Related art

The availability of uniform and reproducible finely minced biological tissues is critical for a broad spectrum of applications in various fields. In biomedical research, precise tissue preparation is vital for studying cellular and molecular processes, conducting drug testing, and unraveling the complexities of disease mechanisms. In clinical diagnostics, mincing tissue is crucial for obtaining uniform samples for pathological analysis, aiding in the accurate diagnosis and prognosis of diseases. In the field of pharmaceuticals, mincing facilitates the extraction of bioactive compounds from plant tissues, contributing to drug development and herbal medicine formulations. The food industry also uses tissue mincing for the production of cultured meat and plant-based products, ensuring the consistency and quality of these innovative food alternatives.

Last but not least, tissue mincing plays a pivotal role in regenerative medicine, particularly in procedures such as tissue engineering and organ transplantation, where the creation of uniform cell cultures or grafts is imperative for successful integration.

In recent developments in regenerative medicine liquid suspensions of micrografts prepared from relatively small biopsy samples are used to grow larger tissue grafts, such as skin grafts, in order to maximise the surface coverage of the graft. A micrograft is a microtissue fragment used for or suitable for the generation of a biological tissue graft, for example a skin tissue graft. A uniform distribution of the suspended micrografts over a spatial area contributes to the success of graft generation, its integration and the subsequent *in situ* tissue regeneration. A homogeneous arrangement of micrografts facilitates consistent cellular interactions and nutrient exchange, fostering optimal conditions for tissue growth and regeneration.

The ability to reliable produce uniform microtissue fragments in a mincing process plays a pivotal role in the validity and reproducibility of microtissue based production, medical treatment outcomes, diagnostic results and scientific experimentation.

In some application or for some tissue constructs it may however be advantageous to arrange microtissue fragments in a different way, for example in a defined pattern.

In recent years, sound-induced morphogenesis (SIM) was found to be a powerful technology to induce such patterns for the generation of biological structures and architectures. The application of sound energy to biological material such as microtissue fragments in a static acoustic wave field conducts the biological material into forming patterns defined by the standing waves. This method allows to specifically define the distribution and/or the pattern of the microtissue fragments in a volume of liquid or gel-like medium.

Traditional methods of tissue mincing include manual mincing with scissors or scalpel, which is time consuming and produces microtissue fragments of heterogenous size and shape. Alternative approaches use homogenizers or grinders which shear and/or pass the tissue through a filtering grid. However, these methods also produce very heterogeneously sized and shaped microtissue fragments.

Cordts et al (Appl. Phys. Lett. 119, 011904 (2021) ; doi :10.1063/5.0053792) describe a microscale dicing device comprising a hollow array of blades for sectioning biological tissue samples into uniformly shaped cubes and/or cuboids.

Today, established methods for generation of microtissue fragments still suffers from severe limitations such as inconsistent sample size, time-intensive procedures, and the risk of contamination. These challenges significantly impact the reliability and reproducibility of results and treatment outcomes which are reliant on precisely prepared microtissue fragments.

In addition, it is difficult to achieve a homogenous spatial distribution of microtissue fragments generated by methods known today, or to achieve a reproducible arrangement of microtissue fragments in a defined pattern.

In the context of a rapidly evolving landscape of biological and biomedical research and development there is therefore an urgent need to find a rapid and reliable way to produce uniform and finely minced tissue samples, which allow for the generation of reproducible results.

### Short disclosure of the invention

It is an aim of the present invention to provide for a solution which overcomes the shortcomings and limitations of the state of the art.

In particular, it is an aim of this invention to provide for a device and/or method for mincing biological tissue samples which is rapid and delivers microtissue fragments of reproducible size and shape.

It is another aim of this invention to provide for a device and/or method which delivers microtissue fragments which are adapted to be easily spread over a spatial area such as to achieve a uniform distribution of the microtissue fragments. Preferably, the microtissue fragments should also be adapted reproducibly arranged in a defined spatial pattern upon appropriate manipulation, for example upon exposure to static ultrasound waves or application to a wound bed.

It is yet another aim of this invention to find an alternative to known processes for mincing biological tissue into uniformly sized microtissue fragments, such as micrografts.

According to the invention, one or more of these aims are attained by the object of the attached claims, and especially by the independent claims. The dependent claims provide optional embodiments of the claimed invention.

In particular, one or more of the above stated aims are attained by a cutting member for mincing biological tissue comprising a cutter body having with a plurality of ducts, each ducts having two open ends.

Each duct opens on one of its ends into a circumferential cutting blade for incising biological tissue. These circumferential blades form the edge of one of the open ends of the ducts.

A plurality of these circumferential cutting blades form at least a portion of a cutting surface of the cutter body. The cutting surface is arranged for supporting a solid biological tissue sample disposed thereon.

The cross-sectional dimensions of the edges of the ducts being in contact with the biological tissue sample is smaller than those of the tissue sample to be cut.

Preferably, the plurality of ducts all have the same dimensions. It is however also possible that ducts arranged on the periphery of an array have a slightly different dimension due to their position.

The cross-sectional dimensions of each of the ducts, respectively of the circumferential blades are sufficiently small in relation to the surface of the biological tissue sample placed thereon such that a sinking or slipping of the tissue sample or a portion thereof into the duct is avoided. The cross-sectional dimensions of the edges of the ducts should be chosen such that sufficiently support the tissue sample placed thereon.

In one embodiment the ducts have a largest cross-sectional dimension of 0.3µm to 1.7mm, or of 0.5µm to 1mm.

The solid biological sample may by a skin tissue sample, for example for example an epidermal and/or a dermal skin-biopsy sample. The invention is however not limited to skin tissue samples. The solid biological sample may also be a cartilage, bone, or muscle tissue sample. The biological sample may be a sample of an animal. It may however also be a plant tissue sample.

The circumferential blades have a circular cross-section or a regular polygonal cross-section of at least five angles.

In a preferred embodiment, the cross-section of the circumferential blades is a hexagon.

Microtissue fragments produced by conventional methods generally take a rectangular surface shape, or a surface shape with sharp corners due to the incision pattern or the micrografting technique used. Rectangular incision shapes, which are commonly used, result in the production of fragments in the shape of a dice or a cuboid.

Microtissue fragments having a sharp-cornered or a rectangular cross-sectional shape are however problematic for a uniform spreading of micrografts over a surface area when provided in liquid medium, as sharp and rectangular corners of the microtissue fragments promote entanglement and aggregate formation. In addition, rectangular and sharp-cornered microtissue fragments have the tendency to accumulate along solid walls of a receptacle, in particular in corners of the receptacle. As a result, the density of microtissue fragments is higher along the peripheral edges of a liquid volume in a receptable than in the more central parts of a surface area. It is therefore almost impossible to avoid clustering and to reproducible achieve a homogenous distribution of the fragments over the whole surface area, in particular for a large number of fragments, exceeding 50 fragments.

Due to the geometry of their cross-section, which is a circle or a regular polygon of at least five, or at least six angles, the circumferential blades of this invention incise shapes with a circular shape or with obtuse angles approaching a circular shape. Sharp-cornered or rectangular shapes of the microtissue fragments are thereby avoided.

The resulting microtissue fragments have the tendency to round off, thereby approaching a spherical or an ellipsoidal three-dimensional shape, depending on their ratio between their length and their cross-sectional diameter.

As a result of their rounded shape the microtissue fragments generated according to this invention significantly reduce or avoid unwanted aggregation, in particular along the periphery of the provided surface area, when suspended in a liquid or gel-like medium. The microtissue fragments produced according to this invention can therefore be spread more easily to achieve a uniform distribution. They can also be conducted into defined positions in a pattern more easily and are therefore better suited for SIM technologies.

The ducts are hollow ducts and may have a circular or a polygonal, for example a hexagonal, cross-section. The ducts may for example be hollow cylinders. However, other cross-sectional geometries are also possible.

The ducts may be provided by channels extending through the body of the cutting member.

Alternatively, the ducts may be formed by tubes supported by a base plate of the body cutting member.

In one embodiment of this invention the ducts are arranged perpendicular or substantially perpendicular to the cutting surface.

The plurality of ducts may form an array. The ducts may be arranged parallel to one another. The ducts may be arranged in a stacked pattern, such as to maximise the number circumferential blades in a given area of the cutting surface. An array may for example comprise at least 20 ducts, at least 50 ducts, at least 100 ducts, at least 200, at least 500, or at least 800 ducts.

In one embodiment the circumferential blades have a hexagonal cross-section and wherein the ducts are arranged in a honeycomb pattern.

The plurality of ducts with circumferential blades may form a grid-like structure.

In order to produce microtissue fragments of uniform dimensions, the plurality of the circumferential blades should have the uniform dimensions. Preferably, the plurality of the ducts should also have uniform dimensions.

For circumferential blades of a hexagonal cross-section a honeycomb pattern array is preferable, since the honeycomb pattern provides for dense packing of blades in any given area. As a result, the yield of microtissue fragments excised from a tissue sample of a given size is optimised. An offset stacked, i.e. honeycomb-like, arrangement is however also suitable to improve the yield of minced tissue sample when blades of other polygonal shapes or of a circular shape are provided.

A dense arrangement of the ducts is preferred, as it avoids that an elastic biological tissue sample is stretched during the incision process. Stretching of the tissue during incision should be avoided as it may impact on the homogeneity of the size of the produced microtissue fragments.

In one embodiment, the circumferential cutting blade is a single bevel. The circumferential cutting blade may however also be a double bevel.

The circumferential cutting blades incise the solid biological tissue sample to generate incised pixels or microtissue fragments of the tissue sample.

The circumferential blades should be sufficiently sharp to incise a biological tissue sample without application of additional pressure, or to incise upon exposure of only minimal cutting force. This incision should be primarily be provided by the cutting blades and not due to a pressure exerted onto the sample which pushed the cutting blades into the sample. Sharp cutting edges provide a cleaner incision edges and are more precise.

In one embodiment, the surface of the bevel which is facing inwardly to the centre of the duct opening is outwardly inclined by 15° to 25°, or by 25° to 20° with respect to the longitudinal axis of the duct.

In other words, the angle of each bevel is 15° to 25°, or by 25° to 20°, which provides for the necessary degree of sharpness to enable clean incision in the biological tissue sample.

In one embodiment the circumferential cutting blade of a duct defines a truncated, circular parabolic shape. This means that the inwardly facing surfaces if the bevelled blades take the shape of at least a circumferential portion of the surface of a circular parabola, which is missing its lowest section.

The parabolic shape of the blades forms a needle-like structure which stitches / pierces the skin tissue before cutting it. The initial stitching provides a better mechanical stability of the blade on the tissue sample, resulting in cleaner incision. The risk of tearing of the tissue is thereby significantly reduced or avoided.

In addition or alternatively, the cutting edges of the circumferential blades may be concave, i.e. the cutting edge of the circumferential blade may comprise a series of portions, for example a side of the polygon shaped blade, which are concave, i.e. curving downwards in direction of the duct. As a result, the cutting blades are provided with pointy tips or apexes, which are adapted to pierce into the tissue sample to facilitate the incision.

In one embodiment of this invention the blades comprise micro-serrations to easily pierce through the biological tissue sample. Micro-serrations are particularly useful for tissues with high elasticity, such as skin tissue.

In order to avoid that the tissue sample disposed in the cutting surface slides off, the cutting surface may be disposed in a recess of the cutter body, forming at least a portion of the base of said recess.

The invention further concerns a stamping member arranged to cooperate with the cutting member of this invention. The stamping member comprises a stamp body with a plurality of stamp rods. Each stamp rod is dimensioned to match a duct of the cutting member, such that the stamp rod can be removably inserted into the duct. Preferably, the stamp is dimensioned to extend through the length of the duct.

The stamp rods serve to push the excised microtissue fragments through the ducts such that they can be collected at the opposed open ends of the ducts.

In one embodiment the stamps make only a minimal or no contribution to the actual incision process. As explained above, it is preferable to incise the tissue sample due to the sharpness of the blades rather than by means of a push force, which may be provided by the stamps, such that the resulting microtissue fragments have cleaner edges and are more uniform.

In one embodiment the stamps have a flat apex. A flat apex avoids that the surface of the microtissue fragments is damaged during their excision from the tissue sample. The apex may also have a rounded apex. Pointy apexes or shapes with sharp edges which contact the surface area of the excised microtissue fragments, are however to be avoided.

In one embodiment, the stamp rod is dimensioned to be inserted in the duct with a clearance. Said clearance may correspond to a distance between the adjacent surfaces of the stamp rod and the inside surface of the duct which is 10% to 25%, or 15% to 20% of the largest cross-sectional dimension of the duct. The largest cross-sectional dimension of the duct is determined in a portion of the duct which is not the circumferential blade portion.

The clearance allows for easy insertion of the stamp rod into the duct. It also prevents that the edges of the excised microtissue fragment are damaged when the fragment is pushed through the duct.

The invention also pertains to a set of a cutting member and a stamping member according to this invention.

The set may be provided in a device.

A device according to this invention comprises a first portion with the cutting member and a second portion with the stamping member. The first portion and the second portion are rotationally linked to one another through a common axis, which lies in a plane of each of each of said portions. In other words, the first and the second portion are hinged about this common axis.

The stamp rods may be inserted into the ducts and removed from the ducts by rotating the first portion and the second portion in respect to each other.

In one embodiment, the cutting surface is curved and the surface formed by the free ends of the stamp rods of the stamping member is compatibly curved to match the curvature of the cutting surface. For example, the cutting surface may take a concave curvature. In this case the surface formed by the free ends of the stamping rods takes a compatible convex curvature. However, the cutting surface may also be convex and the compatible surface formed by the free ends of the stamping rods is therefore concave. The curved surfaces may be provided to reduce the which needs to be total force applied to the cutting member to mince the biological tissue sample. Curved surfaces are particularly advantageous for large surfaces, i.e. surfaces of 0.5cm2 or more, or of 0.8cm2 or more.

The device takes a closed state when the stamp rods of the stamping member are fully inserted in the ducts of the cutting member. The stamp rods of the stamping member are inserted in the ducts of the cutting member when the first portion and the second portion are superposed.

The device takes an open state when the stamp rods are not inserted in the ducts of the cutting member.

The insertion of the stamp rods into the duct when the device takes its closed state pushes the excised microtissue fragments through the ducts.

In one embodiment the stamping member is tiltably mounted on the second portion of the device. As a result the stamping member can be inclined with respect to the plane of the second potion.

The advantage of the tiltable attachment facilitated the insertion of the stamp rods into the ducts of the cutting member rotationally closing when the rotational movement to close the device is performed.

The stamping member may for example be tiltable about a tilt axis, which is arranged parallel to the hinge axis on the second portion.

In one embodiment the stamping member has two degrees of freedom of movement in respect to the second portion of the device. In this embodiment the stamping member is preferably mounted such that it can tilt about a tilt axis and such that it can perform a translational movement. The two degrees of freedom allow for precise positioning adjustment.

The two degrees of freedom may be provided using by combining different bearings and/or flexural pivots. The two degrees of freedom may be provided by a first member allowing for rotational tipping and a second member enabling translational movement of the stamping member. This invention is not particularly limited to how the two degrees of freedom are enabled. Different mechanisms, for example mechanisms disclosed in EP1433575A1, may be provided to enable one rotational and one translational degree of freedom of the stamping member.

Satisfactory cleaning of the device with ducts suitable for tissue mincing is difficult to achieve, as the small diameter of the ducts make it extremely difficult to remove all traces of biological material or dirt after use of the device.

For this reason the cutting member and the stamping member are preferably single use components. At least the cutting member and the stamping member are therefore disposable. It is also possible that the entire device is produced as a disposable device.

The invention further concerns a method for preparing minced tissue grafts comprising the steps of
- providing a cutting member for mincing a solid biological tissue sample having a cutter body with a plurality of ducts with two open ends, each duct opening on one open end into a circumferential cutting blade for incising a biological tissue having a circular cross-section or a regular polygonal cross-section of at least five angles, wherein a plurality of circumferential cutting blades forming at least a portion of a cutting surface of said cutter body,
- disposing a solid biological tissue sample for mincing onto the cutting surface,
- arranging a stamping member comprising a stamp body with a plurality of stamp rods, each stamp rod being dimensioned to match a duct of the cutting member, on the solid tissue sample, such that the stamp rods contact the tissue sample and such that each stamp rod is aligned with a matching duct of the cutting member,
- moving the stamp rods into the matching ducts, thereby causing the circumferential cutting blades to incise the solid biological tissue sample to generate incised pixels of the tissue sample, and/or thereby pushing microtissue fragments excised by the circumferential cutting blades through the ducts onto a surface opposite the cutting surface of the cutting member.

With respect to what is known in the art, the invention provides the advantage that microtissue fragments approximating a spherical or an ellipsoidal shape are produced. The advantage of this shape is that it avoids entanglement and/or the formation of aggregates or clusters of fragments. Microtissue fragments of this shape are therefore significantly better adapted for uniform spreading and/or for being arranged into a defined pattern.

The term "microtissue fragment" refers to fragment of a biological tissue sample, for example a tissue graft, having a sub-millimetre largest cross-sectional dimension. Microtissue fragments typically have a largest cross-sectional dimension of no more than 500µm. Typically, the length of a microtissue fragment is also in the sub-millimetre range.

The term "micrograft" as used herein refers to a microtissue fragment used for or suitable for the generation of a biological tissue graft, for example a skin tissue graft.

The term "mincing" as used herein refers to incising, piercing and /or shearing biological tissue grafts to obtain microtissue fragments.

The singular "a", "an" and "the" include the plural equivalents unless the context distinctly indicates otherwise.

The terms "comprises" and "contains mean "includes" in a non-limiting sense.

The terms "e.g.", "for example" and "such as" as used herein indicate specific non-limiting examples that fall under a more general category.

### Short description of the drawings

Exemplar embodiments of the invention are disclosed in the description and illustrated by the drawings in which:
Figure 1A is a perspective view of an example of a cutting member according to this invention, showing the cutting surface of the cutting member,
Figure 1B is a perspective view of an example of a cutting member according to this invention, showing the surface opposite the cutting surface,
Figure 1C is a top view of the cutting member of Figure 1A and 1B, showing its cutting surface;
Figure 1D is a bottom view of the cutting member of Figure 1A and 1B, showing a collection recess in the surface opposite the cutting surface;
Figure 1E is depicts an A-A cross-section section through the cutting member of Figure 1C;
Figure 2A is a perspective view of an example of a stamping member according to this invention, showing the stamp rods;
Figure 2B is atop view of the stamping member of Figure 2A;
Figure 2C is a B-B cross-sectional view of the stamping member of Figure 2B;
Figure 3A is a sectional view along the central longitudinal axis of an example of a mincing device comprising a cutting member and a stamping member according to this invention, the depicted device is in its open position;
Figure 3B is a sectional view of the example shown in Figure 3A in a second open position in which the stamp rods are brought into alignment for insertion into the ducts;
Figure 3C is a sectional view of the example shown in Figure 3A in a closed position;
Figure 3D shows a perspective view of the mincing device of Figures 3A to 3C in its open state.

### Examples of embodiments of the present invention

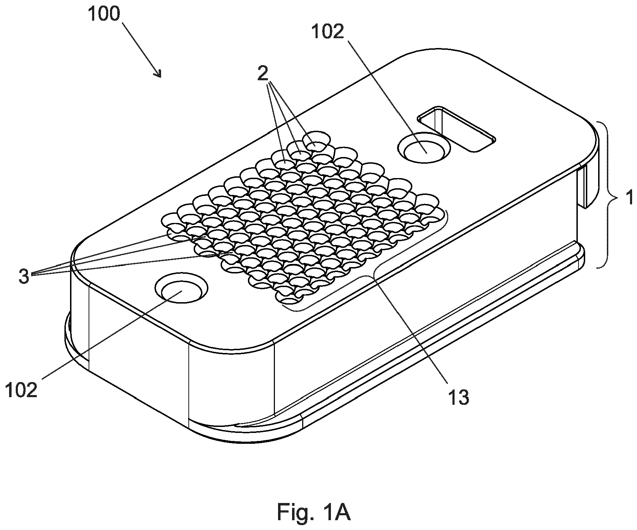

An exemplary embodiment of a cutting member according to this invention is shown in Figures 1A to 1D.

Figure 1A illustrates a perspective view of the cutting member 100 from the top. The cutting member is formed of a body 1 which is traversed by a plurality of ducts 2 arranged in a honeycomb array. The ducts 2 are closed channels extending through the body 10 and having openings on two opposite surfaces 13, 15 of the cutting member. The openings of the ducts 2 on one of these surfaces are provided with circumferential cutting blades 3.

In the illustration shown in these Figures, the ducts 2 as well as the circumferential blades 3 have a circular cross-section. The cutting blades 3 and/or the ducts may however also have a cross-section of shaped as a regular polygon of at least five corners, for example shaped as a hexagon.

The array of the depicted embodiment comprises 100 ducts 2. All the ducts have the same shape. The number and arrangement of ducts may vary depending on their dimensions, in particular their cross-sectional dimensions, and the size of the cutting member. Typically for biological tissue mincing purposes, the number of ducts should be from 20 to 1000, or from 50 to 500, or from 50 to 200.

The plurality of the circumferential cutting blades 3 form the cutting surface 13 of the cutting member, onto which a tissue sample to be minced is disposed.

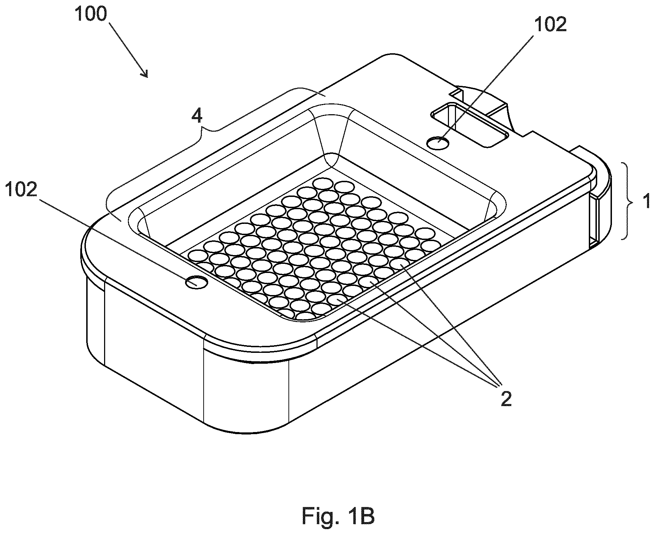

Figure 1B is a perspective bottom view of the example shown in Figure 1A. The surface 15 opposite the cutting surface with the opposite ends of the ducts 2 is visible in this illustration. The ducts 2 may end in a recessed area 4 of the body of the cutting member as is the case in the depicted example. This recessed area serves to collect the excised microtissue fragments, or pixels, which have been moved through the ducts into this area. It is therefore also referred to as the collection recess 4. The rims of the collection recess 4 prevent that microtissue fragments inadvertently glide off the cutting member.

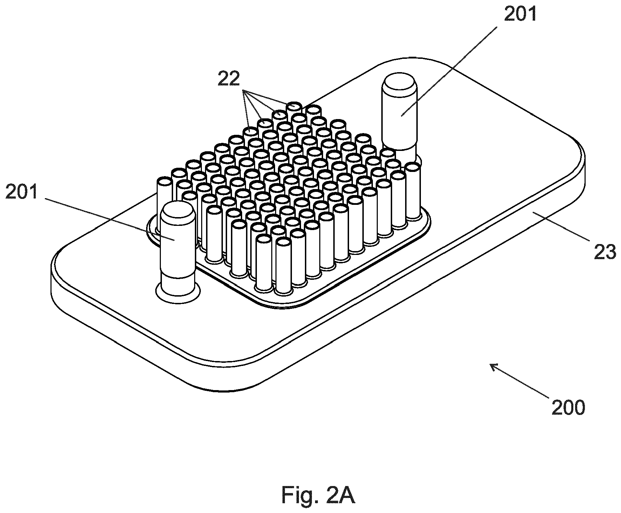

The cutting member 100 may be provided with one or more guiding elements, for example with guiding apertures 102, for aligning a compatible stamping member 200 (depicted in Figures 2A to 2C) comprising stamp rods 22, such that said stamp rods 22 are aligned with the ducts 2 of the cutting member 100 and can be inserted therein. For this purpose, the stamping member may be provided with one or more compatible counter-elements adapted to cooperate with the one or more guiding elements, for example one or more guiding rods 201.

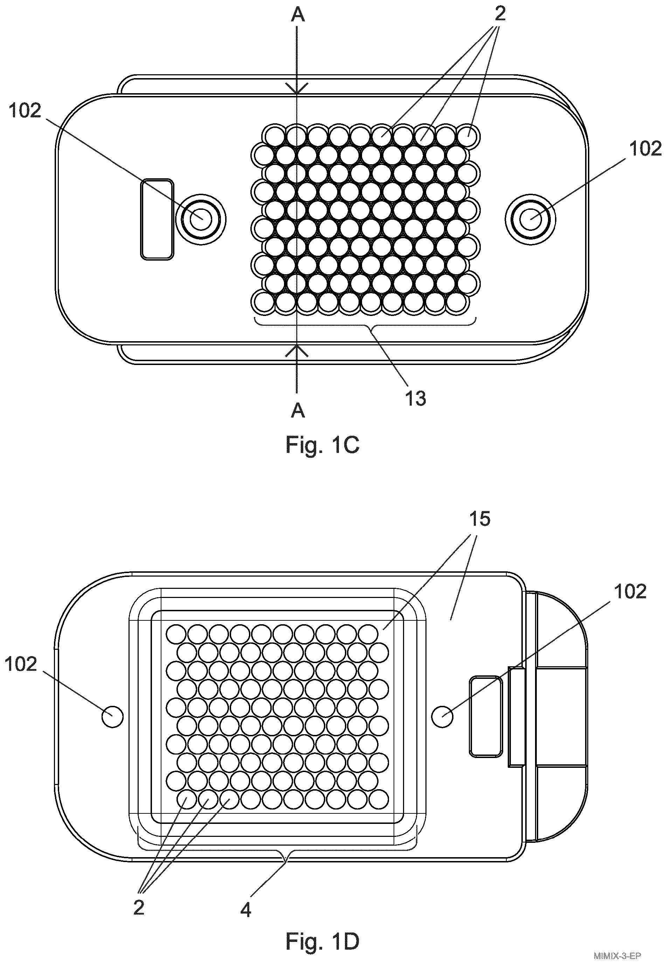

Figure 1C Shows a top view onto the cutting surface 13 of the embodiment of the cutting member of Figures 1A and 1B, while Figure 1D is a bottom view of the same embodiment in which the opposite surface 15 with the collection recess 4 is depicted.

To facilitate for precise and clean incisions, the circumferential blades 3 are preferably surgical types of blades. This means that the blades have a surgical degree of hardness of a Rockwell C hardness of about 50 to 65, or 54 to 62. The blades may for example be surgical grade stainless steel which is hardened to achieve the required surgical hardness.

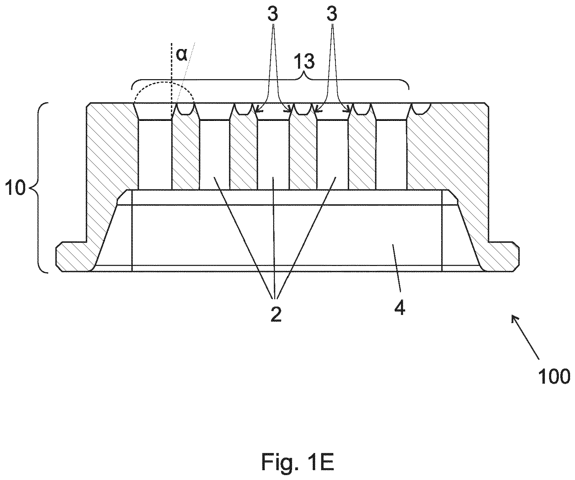

The circumferential cutting blades 3 of the ducts 2 may be double or single beveled blades. The single bevel or each side of a double bevel should be sharpened to an angle α which is suitable for incising biological tissue. The angle α may be at least 15°, at least 17°, or at least 20° to 25°, as is shown in Figure 1E. Figure 1E shows an A-A cross-section of the cutting member shown in Figure 1C.

To generate homogenous microtissue fragments, a solid biological sample tissue is first disposed on the cutting surface 13 of the cutting member.

The solid biological sample may by a skin tissue sample, for example for example an epidermal and/or a dermal skin-biopsy sample. For skin tissue grafting it is preferable to provide a skin biopsy, for example a punch biopsy. The biopsy sample should preferably comprise the dermis layer as well as at least a portion of the epidermis layers of the skin. For this reason, the skin biopsy sample should be taken to a depth of 0.3µm to 1.5mm, for example around 0.8µm.

The circumferential cutting blades 3 incise contact the tissue sample to pierce and/or incise it. Preferably the blades are sufficiently sharp such that the incisions and/or piercing occurs without the application of additional pressure. In other words, the weight of the tissue sample is sufficient to cause the blades to incise and/or pierce the tissue.

The blades 3 are configured to excise microtissue fragments from the tissue sample disposed on the cutting surface 13. Optionally, some pressure may be applied to complete the full circumferential excision of the microtissue fragments from the tissue sample.

The excised microtissue fragments or pixels are then moved through the ducts 2 to the opposite surface 15 of the cutting member. The microtissue fragments may for example be pushed through the ducts 2 using compatible stamp rods 22 (shown in Figure 2A), which are inserted into the ducts 2 from the cutting surface towards the opposite surface 15 of the cutting member, thereby delivering the excised microtissue fragments to said opposite surface 15.

Preferably the cutting member is turned around when the microtissue fragments are moved through the ducts 2, such that the surface 15 opposite the cutting surface faces upwards when the microtissue fragments are moved onto this surface, such as to avoid the microtissue fragments falling off the surface. This turning step should in particular be performed with embodiments of cutting members provided with a collection recess 4. The turning step may for example be enabled by solid bearings. However, other mechanisms driving or enabling this rotation in the turning step are also suitable. The rotation may be automated, it may for example be enabled by an automated inverter.

Alternatively, if the cutting member is not turned around, a receptacle for collecting the microtissue fragments should be suitably positioned to collect microtissue fragments which fall of the downwards facing surface of the cutting member.

The microtissue fragments which were moved through the ducts 2 may be scraped off the surface of the cutter body using a suitable tool, for example a spatula, or picked off with a suitable tool, for example a tweezer.

Additionally or alternatively, the microtissue fragments which were moved through the ducts 2 may be suspended in a suitable liquid, for example a physiological solution, to facilitate their collection.

In an embodiment comprising a collection recess 4 or an equivalent structure, the rims of a collection recess 4 or the equivalent structure reduce the risk that or that the microtissue are inadvertently flushed off if the microtissue fragments are suspended in a liquid on this surface.

For moving the excised microtissue fragments to the plurality of ducts 2 it is particularly efficient to use a stamping member comprising a plurality of compatible stamp rods 2 which are arranged for insertion into the plurality of ducts 2.

An example of a stamping member 200 which is compatible with the cutting member 100 of Figures 1A to 1E is depicted in Figures 2A to 2C.

Figure 2A shows a perspective view from the top of an example of a stamping member 200 according to this invention. The stamping member comprises an array of stamp rods 22 which are arranged on a base plate 23 of the stamping member. The stamping member of this example further comprises two guiding rods 201 which are designed to be inserted into the corresponding guiding apertures 102 of the cutting member 100 such as to facilitate a proper alignment of the ducts 2 and the stamp rods 22 for ease of insertion.

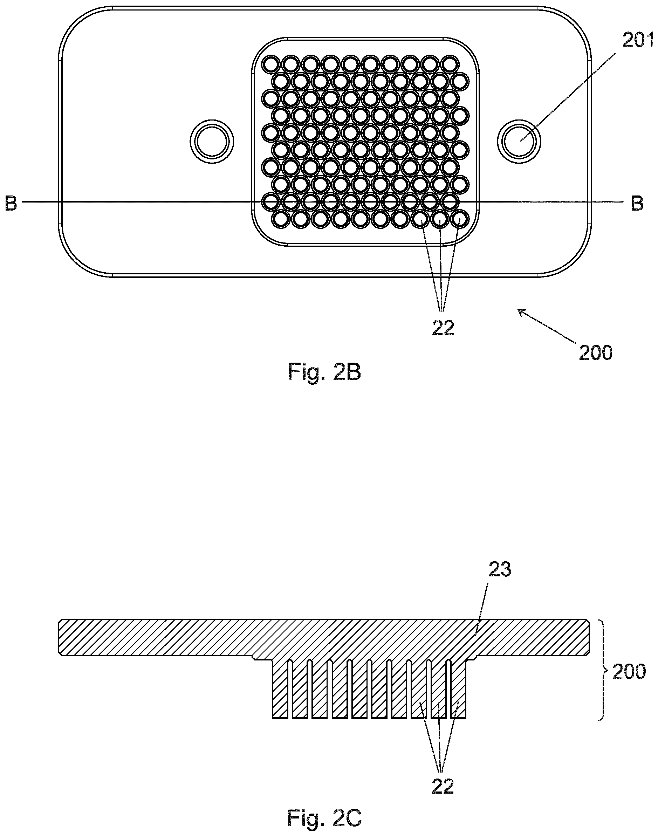

Figure 2B is a top view of the same example of the stamping member 200 indicating the line B-B of the cross-sectional view shown in Figure 2C.

Figure 2C shows a cross-sectional view B-B of the example of the stamping member 200. The stamp rods 22 have a cylindrical shape and extend perpendicularly from the base plate 23. The free ends of the rods may be flat. They may also be slightly concave, i.e having a maximal depression depth of no more than 20%, or no more than 10%, or no more than 5% of the largest cross-sectional dimension of the stamp rod 22. Alternatively, the free ends of the stamp rods may be slightly convex, i.e having a maximal elevation of no more than 20%, or no more than 10%, or no more than 5% of the largest cross-sectional dimension of the stamp rod 22.

In order to avoid damage to the excised tissue fragments, it is important that the portions of the stamp rods which contact the microtissue fragment are devoid of any sharp structures.

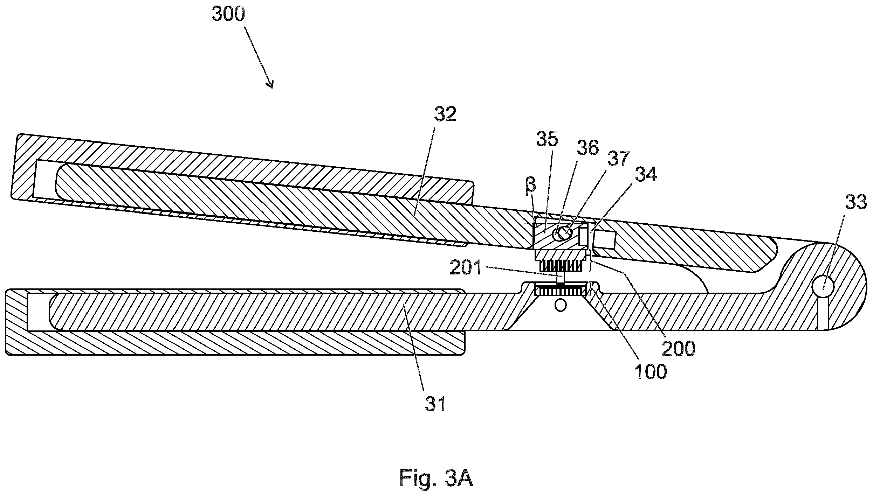

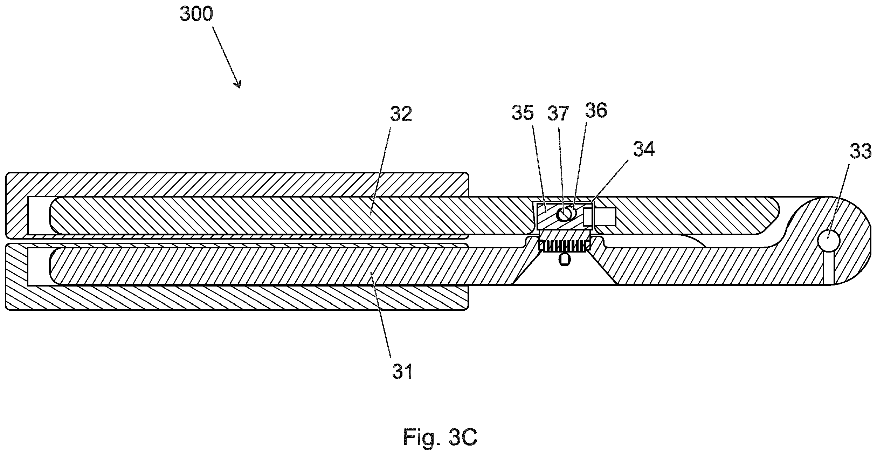

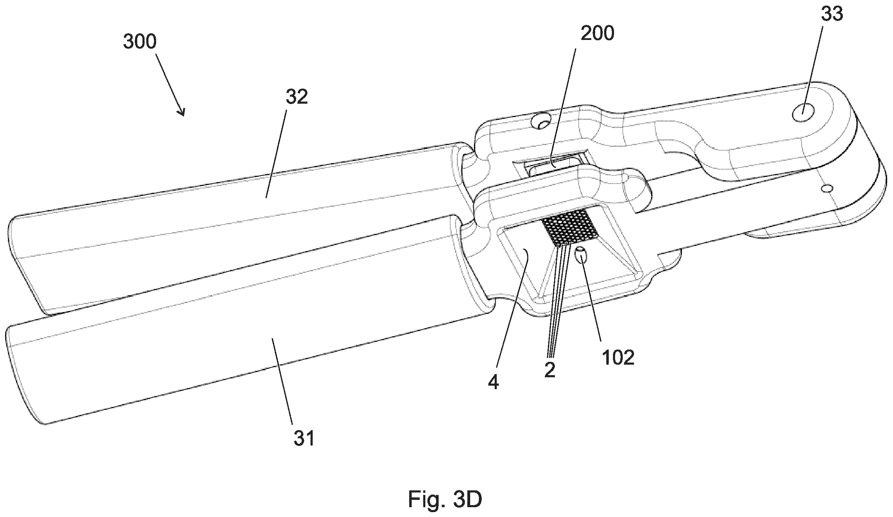

The cutting member 100 and the stamping member 200 of this invention may be provided in a mincing device 300, in which the cutting member 100 is provided on a first portion, which may be a first lever 31, and in which the stamping member 200 is provided on a second portion, which may be a second lever 32. An exemplary embodiment of a mincing device of this invention is illustrated in Figures 3A to 3D.

In the shown embodiment the first lever 31 comprising the cutting member 100 and the second lever 32 comprising the stamping member 200 are hinged about a common hinge axis 33. The cutting member 100 and the stamping member 200 are positioned on their respective levers such that the stamp rods 22 of the stamping member 200 are inserted in the ducts of the cutting member when the two levers are superposed. In other words, the stamp rods 22 of the stamping member 200 are inserted in the ducts of the cutting member when the rotational angle between the first lever and the second lever is zero.

Figure 3A depicts the mincing device 300 in an open position. In the shown embodiment the stamping member 200 is fixed on an adjustment member 35 which is inserted into an adjustment recess 34 in the second lever 32, such that it can tilt about a tilt axis 37 which is parallel to the hinge axis of the mincing device. In the depicted example the tilt axis 37 extends through a oblong through hole 36 in the adjustment member 35. The longitudinal shape of the through hole 36 allows for translational movement along of the adjustment member 35. The oblong through hole 36 provides the adjustment member 35, and by extension the stamping member 200 with two degrees of freedom in its movement, i.e. a rotational and a translational degree of freedom.

The adjustment elements 34, 35, 36, 37 thus enable rotational as well as longitudinal adjustment of the alignment of the stamp rods 22 during their insertion into the ducts 2, thereby facilitating a smooth and frictionless insertion. As a result the risk of damaging the tissue sample and/or the excised microtissue fragments is significantly reduced. It is therefore advantageous to provide the mincing device with elements for adjusting or fine-tuning the rotational and/or longitudinal alignment of the stamp rods 22 during their transition from the open position to the closed position of the device. These elements may comprise the elements shown in Figures 3A to 3C. However, the invention is not strictly limited to this specific set of adjustment elements and/or the specific arrangement of the adjustment elements shown.

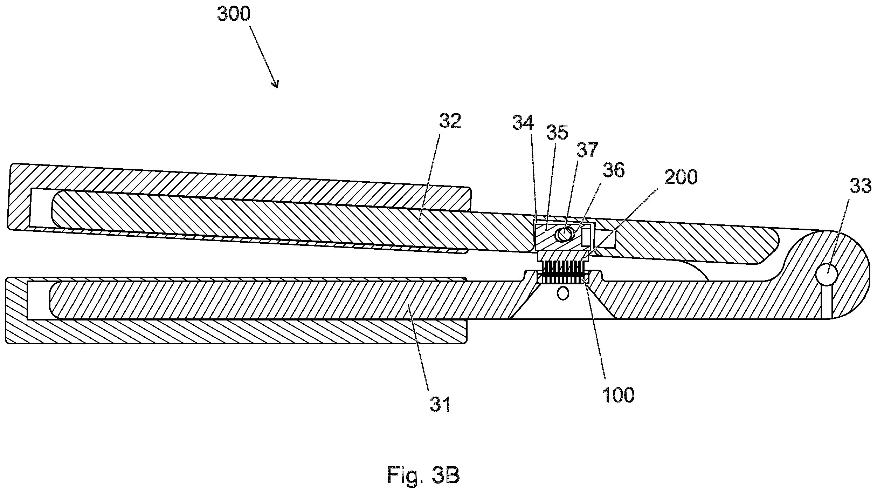

In Figure 3A, in its open position, the adjustment member 35 is arranged at a tilt angle β in respect to the longitudinal axis of the second lever 32. When moved closer to the cutting member 100, the tilt angle β between the adjustment member 35 and the longitudinal axis of the second lever 32 is reduce, as shown in Figure 3B. When the stamp rods 22 are fully inserted into the ducts of the cutting member 100 such that the mincing device takes its closed position, the adjustment member 35 is substantially parallel the tilt angle β between the adjustment member 35 and the longitudinal axis of the second lever 32 equals zero. As can be seen by the translational movement of the tilt axis 35 in the longitudinal through hole 34, the longitudinal position of the adjustment member 34 with respect to the second lever 22 has also been adjusted during the transition from the open to the closed position of the mincing device.

The levers 31, 32 of the mincing permits to increase the pressure onto the stamp rods 22 during their insertion into the ducts. It is therefore easier to insert the stamping member 200 into the cutting member, which is particularly advantageous for manual operation of the device. An easy and smooth insertion of the stamp rods 22 into the ducts 2 also ensures that the excised microtissue fragments are pushed all the way through the surface of the cutting member without getting stuck in the ducts 2. In addition, it also reduced the risk of damage to the microtissue fragments.

Figure 3E depicts a perspective view of the embodiment of the mincing device shown in Figures 3A to 3C. The collection recess 4 and one guiding aperture 102 are visible in this illustration. For efficient collection of the excised microtissue fragments in the collection recess 4 the mincing device should be turned about its longitudinal axis by 180° when the stamp rods 22 are inserted into the ducts 2, such that the previously upward facing cutting surface is facing downwards when the stamp rods 22 fully extend through the ducts 2. This way the collection recess 4 is facing upwards when the stamp rods 22 are fully inserted and the microtissue fragments have been pushed through the ducts 2.

## Claims

1. A cutting member (100) for mincing biological tissue comprising a cutter body (10) having a plurality of ducts (2) with two open ends, each duct opening on one open end into a circumferential cutting blade (3) for incising biological tissue, a plurality of circumferential cutting blades forming at least a portion of a cutting surface (13) of said cutter body, wherein said cutting surface (13) is arranged for supporting a solid biological tissue sample, for example a skin biopsy sample, **characterized in that** the circumferential blades (3) have a circular cross-section, or a regular polygonal cross-section of at least five angles.

2. The cutting member according to claim 1, wherein the ducts (2) are arranged perpendicular to the cutting surface (13) and traversing the cutter body (10).

3. The cutting member according to claim 1 or 2, wherein the circumferential blades (3) have a hexagonal cross-section.

4. The cutting member according to any of claims 1 to 3, wherein the ducts (2) are arranged in a honeycomb pattern.

5. The cutting member according to any of claims 1 to 4, the ducts (2) having a largest cross-sectional dimension of 200µm to 1000µm, or of 500µm to 800µm.

6. The cutting member according to any of claims 1 to 5, the circumferential cutting blade (3) being a single bevel, or a double bevel, the single bevel or each side of a double bevel being sharpened to at least 15°, at least 17°, or at least 20° to 25°.

7. The cutting member according to any of claims 1 to 6, wherein the circumferential cutting blade (3) defines a truncated, circular parabolic shape.

8. The cutting member according to any of claims 1 to 7, wherein the cutter body (10) comprises a collection recess (4) arranged on a surface (15) opposite the cutting surface and wherein the ducts (2) open into said collection recess (4).

9. The cutting member according to any of claims 1 to 8, wherein the biological tissue is a skin tissue sample, for example an epidermal and/or dermal skin-biopsy sample.

10. A stamping member (200) configured to cooperate with the cutting member (100) for mincing biological tissue of any of claims 1 to 8, comprising a stamp body with a plurality of stamp rods (22), each stamp rod (22) being dimensioned to be compatible with a duct (2) of the cutting member, such that the stamp rod (22) can be removably inserted into said duct (2).

11. The stamping member of claim 10, wherein the stamp rod (22) is dimensioned to be inserted in the duct (2) with a clearance.

12. A set for preparing minced tissue grafts comprising the cutting member (100) of any of claims 1 to 8 and the stamping member (200) of claim 10 or 11.

13. A mincing device (300) for preparing minced tissue grafts comprising a first portion (31) with the cutting member (100) of any of claims 1 to 9 and a second portion (32) with the stamping member (200) of claim 10 or 11, wherein the first and the second portion (31, 32) are hinged about a common hinge axis (33), wherein the device takes a closed state when the first portion (31) and the second portion (32) are superposed, such that the stamp rods (22) of the stamping member extend through the ducts (2) of the cutting member, and wherein the device takes an open state when the stamp rods (22) are not inserted in the ducts (2) of the cutting member.

14. The device according to claim 13, wherein the stamping member (200) has one degree of freedom, enabling an inclination of the stamping member (200) with respect to the plain of said second portion (32), or wherein the stamping member (200) has two degrees of freedom with respect to said second portion (32), which are a rotational degree of freedom enabling an inclination of the stamping member (200) with respect to the plain of said second portion (32) and a translational degree of freedom.

15. The device according to claim 14, wherein the stamping member (200) is arranged to incline about a tilt axis (37) comprised in the second potion (32), said tilt axis (37) being parallel to the hinge axis (33) of the device.

16. The device according to any of claims 13 to 15, being a disposable device.

17. Method for preparing minced tissue grafts comprising
- providing a cutting member (100) for mincing biological tissue comprising a cutter body (10) with a plurality of ducts (2), each duct (2) having two open ends, each duct (2) opening on one open end into a circumferential cutting blade (3) for incising a biological tissue, said circumferential cutting blade (3) having a circular cross-section, or a regular polygonal cross-section of at least five angles, wherein a plurality of circumferential cutting blades (3) form at least a portion of a cutting surface (13) of said cutter body (10),
- disposing a solid biological tissue sample for mincing onto the cutting surface (13),
- arranging a stamping member (200) comprising a stamp body with a plurality of stamp rods (22), each stamp rod (22) being dimensioned to match a duct (2) of the cutting member (100), on the solid tissue sample, such that the stamp rods contact the tissue sample, and such that each stamp rod (22) is aligned with a matching duct (2) of the cutting member,
- moving the stamp rods (22) into the matching ducts (2), thereby pushing microtissue fragments excised by the circumferential cutting blades (3) through the ducts onto a surface (15) opposite the cutting surface of the cutting member (100).
